# EUROPÄISCHE PATENTANMELDUNG

(11) **EP 1 311 051 A2**
(43) Veröffentlichungstag der Anmeldung: **14.05.2003**
(21) Anmeldenummer: 02024776.3
(22) Anmeldetag: 07.11.2002
(51) Int. Cl.: H02K 5/14

(54) **Elektrische Maschine, insbesondere Drehstromgenerator für Kraftfahrzeuge**

(30) Priorität: 09.11.2001 DE 10155221
(71) Anmelder: ROBERT BOSCH GMBH, 70442 Stuttgart (DE)
(72) Erfinder: Acar, Sezgin, 71638 Ludwigsburg (DE)

(57) **Zusammenfassung**

Es wird ein elektrische Maschine, insbesondere ein Drehstromgenerator für Kraftfahrzeuge mit einer Schleifkontaktanordnung (18) am hinteren Wellenende eines Läufers (12) vorgeschlagen, die von einer Schleifringkapsel (23) eingefasst ist, welche den unteren Endbereich eines Bürstenhalters (21) staub- und feuchtigkeitsdicht aufnimmt. Zur Belüftung des von der Schleifringkapsel (23) gebildeten Schleifringraumes (24) ist sie im Bereich der Schleifkontaktanordnung (18) mit mindestens einem luftdurchlässigen, feuchtigkeitsdichten Wandungsbereich (36), zum Lufteintritt und im Bereich der Lagerbohrung ist sie mit mindestens einem zum Ansaugbereich (36) eines Lüfters (29) führenden Kanal (37) zum Luftaustritt versehen.

## Beschreibung

### Stand der Technik

Die Erfindung betrifft eine elektrische Maschine, insbesondere einen Drehstromgenerator für Kraftfahrzeuge mit einer Schleifkontaktanordnung am hinteren Wellenende gemäß dem Oberbegriff des Anspruchs 1.

Bei derartigen elektrische Maschinen wird die Schleifring- bzw. Kommutatoranordnung oftmals gekapselt ausgeführt, wobei Kohlebürsten in einem Bürstenhalter aufgenommen und geführt sind, dessen unterer Endbereich in eine Öffnung der Kapselung eingesetzt ist. Bei einer solchen, aus dem Deutschen Gebrauchsmuster G 92 04 486 bekannten Lösung ist zum Schutz der Schleifringanordnung vor Umwelteinflüssen wie Staub und Feuchtigkeit der Bürstenhalter mit einer Dichtung in die Öffnung der Schleifringkapsel eingesetzt. Dadurch kann im Betrieb der Maschine eine hohe Wärmeentwicklung durch Eigenerwärmung sowie über die Wärmeabstrahlung von benachbarten Bauteilen in dem von der Schleifringkapsel gebildeten Schleifringraum auftreten, mit der Folge, dass die Luft im Schleifringraum austrocknet. Dies wirkt sich nachteilig auf die Lebensdauer der Kohlebürsten-Schleifringanordnung aus. Eine weitere Verkürzung der Lebensdauer ergibt sich dabei auch noch durch den verstärkten Abrieb an den Kohlebürsten und Schleifringen.

Mit der vorliegenden Lösung wird angestrebt, durch eine gezielte Maßnahme die im Schleifringraum auftretenden Temperaturen herabzusetzen und damit die Lebensdauer der Kohlebürsten-Schleifringanordnung zu erhöhen.

### Vorteile der Erfindung

Eine Kapselung des Schleifringraumes von elektrischen Maschinen mit den kennzeichnenden Merkmalen des Hauptanspruchs hat den Vorteil, dass durch eine gezielte Belüftung des Schleifringraumes Kühlluft von außen die Temperatur im Schleifringraum herabsetzt, um damit die Lebensdauer der Kohlebürsten-Schleifringanordnung zu erhöhen. Außerdem wird durch die von außen in den Schleifringraum eingesaugte Kühlluft der Abrieb des Kohlebürsten-Schleifringsystems verringert und zumindest teilweise von der Kühlluft aus dem Schleifringraum abgeführt, wodurch eine weitere Verbesserung der Lebensdauer zu erzielen ist. Die vorgeschlagene Lösung ist dabei zur Kapselung von Schleifringen und Kommutatorlamellen gleichermaßen geeignet.

Durch die in den Unteransprüchen aufgeführten Maßnahmen ergeben sich vorteilhafte Weiterbildungen und Verbesserungen der im Hauptanspruch angegebenen Merkmale. So ist es besonders vorteilhaft, einen Wandungsbereich der Schleifringkapsel aus einem porösen Material herzustellen indem die Poren so klein sind, dass zwar Luft aber keine Feuchtigkeit von außen eindringen kann. Je nach Gestaltung der Schleifringraumkapsel kann es auch vorteilhaft sein, den Wandungsbereich für den Kühllufteintritt als Fenster auszubilden, das durch einen luftdurchlässigen Filter verschlossen ist. Bei der Herstellung der Schleifringkapsel aus Kunststoff ist es vorteilhaft, wenn der Filter mit seinen Rändern im Material der Schleifringkapsel eingespritzt ist. Damit die Kühlluft möglichst ungehindert von der Anordnung und Gestaltung des Bürstenhalters in den Schleifringraum eintreten kann, wird in zweckmäßiger Weise vorgeschlagen, den luftdurchlässigen, feuchtigkeitsdichten Wandungsbereich der Schleifringkapsel so anzuordnen, dass er der Öffnung für den Bürstenhalter gegenüberliegt. Da in ungünstigen Einbaulagen der elektrischen Maschine unter Umständen auch Spritzwasser in den Schleifringraum oder an die Schleifringkapsel gelangen und den luftdurchlässigen Wandungsbereich von innen oder außen verschließen kann, wird vorgeschlagen, dass am Umfang der Schleifringkapsel zwei luftdurchlässige, feuchtigkeitsdichte Wandungsbereiche mit Abstand zueinander angeordnet sind.

Bei den bekannten Lösungen ist am lagerseitigen Ende der Schleifringkapsel ein Passring angeformt, der in die Lagerbohrung des Lagerschildes an der Rückseite der elektrischen Maschine eingesetzt ist. Um zur Belüftung des Schleifringraumes einen ausreichend großen Luftaustritt zum Ansaugbereich des hinteren Lüfters der Maschine zu bekommen, werden in einfachster Weise am Innenumfang des in die Lagerbohrung eingesetzten, am lagerseitigen Ende der Schleifringkapsel angeformten Passringes mehrere, axial verlaufende Kanäle verteilt angeordnet, die einerseits mit dem Schleifringraum und andererseits mit dem Ansaugbereich des Lüfters in Verbindung stehen. Da bei relativ kleinen Maschinen zwischen dem Läufer und dem Lager der Maschine unter Umständen kein ausreichender Ansaugbereich des Lüfters vorhanden ist, wird alternativ vorgeschlagen, den am lagerseitigen Ende der Schleifringkapsel angeformten, in die Lagerbohrung eingesetzten Passring am Umfang mit mindestens einem, zum Schleifringraum der Schleifringkapsel führenden Loch zu versehen, das mit mindestens einem Durchbruch in der Nabe des Lagerschildes fluchtet, wobei der mindestens eine Durchbruch von dem im Ansaugbereich des Lüfters liegenden Außenumfang der Nabe bis zur Lagerbohrung, vorzugsweise bis zum äußeren Endabschnitt der Lagerbohrung reicht.

### Zeichnungen

Zwei Ausführungsbeispiele der Erfindung sind in der Zeichnung dargestellt und in der nachfolgenden Beschreibung näher erläutert.

Es zeigen:
Figur 1 in vergrößerter Darstellung einen Längsschnitt durch den hinteren Teil eines Drehstromgenerators mit der gekapselten Schleifringanordnung als erstes Ausführungsbeispiel,
Figur 2 einen Längsschnitt durch die Nabe des hinteren Lagerschildes der Maschine mit eingesetzter Schleifringkapsel als zweites Ausführungsbeispiel und
Figur 3 eine Querschnitt durch die Schleifringkapsel gemäß III-III aus Figur 2.

### Beschreibung der Ausführungsbeispiele

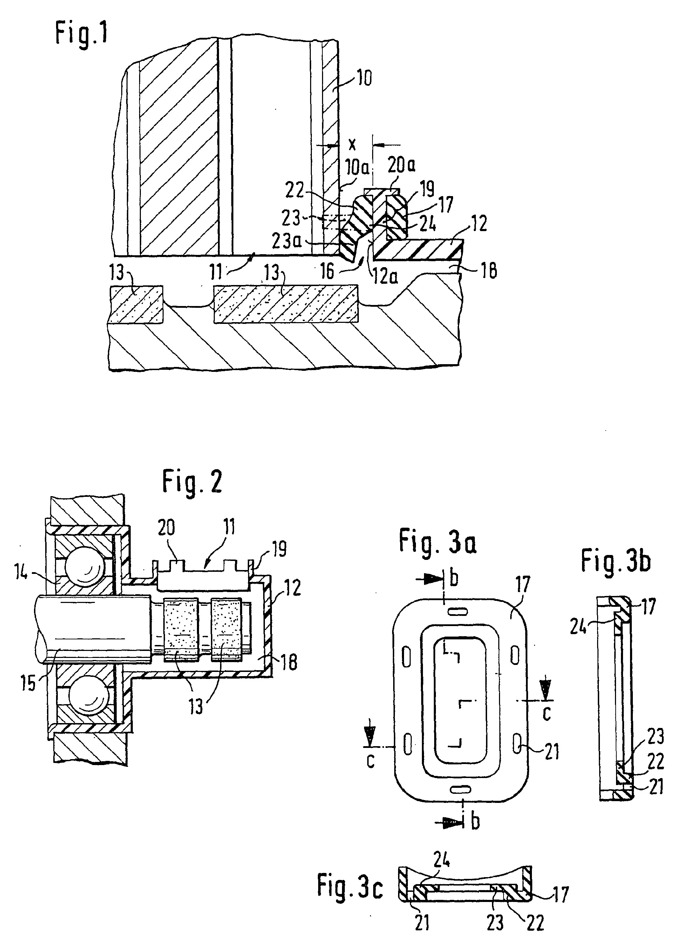

In Figur 1 ist ein Längsschnitt des hinteren Endes eines Drehstromgenerators für Kraftfahrzeuge in vergrößertem Maßstab dargestellt und mit 10 bezeichnet. Er besteht im wesentlichen aus einem Ständer 11 und einem Klauenpolläufer 12, dessen Läuferwelle 13 beidseitig am Ständer 11 an Lagerschilden gelagert ist. An dem in Figur 1 dargestellten hinteren Lagerschild 14 ist ein Kugellager 15 in einer Lagerbohrung 16 einer Nabe 17 des Lagerschildes 14 eingesetzt, welches die Läuferwelle 13 aufnimmt. Am hinteren Wellenende 13a der Läuferwelle 13 befindet sich eine Schleifringanordnung 18 aus zwei axial nebeneinander und elektrisch isoliert angeordneten Schleifringen 19, an die in nicht dargestellter Weise jeweils ein Ende einer Erregerwicklung des Klauenpolläufers 12 angeschlossen ist. Zur Stromversorgung der Erregerwicklung wirken die Schleifringe 19 jeweils mit einer Kohlebürste 20 eines Bürstenhalters 21 zusammen, der auf der Außenseite des hinteren Lagerschildes 14 befestigt ist und mit einem Regler für den Erregerstrom eine Baueinheit bildet. Die Schleifringanordnung 18 ist von-einer Schleifringkapsel 23 aus Kunststoff eingefasst, die einen die Schleifringe 19 umgebenden Schleifringraum 24 bildet. Der Bürstenhalter 21 ist mit seinem unteren Endbereich 21a in eine Öffnung 25 der Schleifringkapsel 23 eingesetzt, die mit einem nach außen gerichteten, umlaufenden Kragen 26 versehen ist. Mittels einer zwischen dem Kragen 26 und dem unteren Ende 21a des Bürstenhalters 21 eingesetzten Dichtringes 27 ist die Öffnung staub- und feuchtigkeitsdicht verschlossen. Am lagerseitigen Ende der Schleifringkapsel 23 ist ein Passring 28 angeformt, der das Kugellager 15 aufnimmt und der verdrehsicher in die Lagerbohrung 16 des Lagerschildes 14 eingesetzt wurde. Auf der Innenseite des Lagerschildes 14 ist ein Lüfter 29 stirnseitig am Klauenpolläufer 12 befestigt. Ein Kühlluftstrom 30 wird bei rotierendem Lüfter 29 durch dessen Lüfterschaufeln 31 über achsnahe, stirnseitige Lufteinlässe 32 des Lagerschildes 14 axial angesaugt und radial nach außen geblasen, wo er einen hinteren Wickelkopf 33 des Ständers 11 kühlt und schließlich durch Luftschlitze 34 nach außen gelangt. Der von den Lüfterschaufeln 31 umgebene Raum auf der Innenseite des Lagerschildes 14 bildet dabei einen Ansaugbereich 35, in dem durch die rotierenden Lüfterschaufeln ein Unterdruck erzeugt wird.

Zur Vermeidung einer Überhitzung der Luft im Schleifringraum 24 der Schleifringkapsel 23 ist im Bereich der Schleifringanordnung ein Wandungsbereich 36 der Schleifringkapsel 23 luftdurchlässig aber feuchtigkeitsdicht ausgebildet, indem dieser Wandungsbereich aus einem porösen Material besteht. Dieser Wandungsbereich 36 der Schleifringkapsel 23 liegt der Öffnung 25 für den Bürstenhalter 21 gegenüber, so dass dort Kühlluft ohne bauliche Behinderungen in die Schleifringkapsel 23 eintreten kann. Ferner sind am Innenumfang des an der Schleifringkapsel 23 angeformten Passringes 28 mehrere axial verlaufende Kanäle 37 verteilt angeordnet, die einerseits mit dem Schleifringraum 24 und andererseits mit dem Ansaugbereich 35 des Lüfters 29 in Verbindung stehen. Über diese Kanäle 37 wird Kühlluft 39 aus dem Schleifringraum 24 zum Ansaugbereich 35 des Lüfters 29 transportiert, so dass in der Schleifringkapsel 23 ein Unterdruck entsteht. Aufgrund dieses Unterdrucks wird somit ständig über das poröse Material im Wandungsbereich 36 der Schleifringkapsel 23 Kühlluft 38 angesaugt und dadurch eine Überhitzung der Luft im Schleifringraum 24 vermieden.

Figur 2 zeigt in einem weiteren Ausführungsbeispiel eine Schleifringkapsel 23a in der Lagerbohrung 16 der Nabe 17 des hinteren Lagerschildes 14 eines Drehstromgenerators in vergrößerter Darstellung, wobei die Öffnung 25 mit dem Kragen 26 zur Aufnahme eines Bürstenhalters in der Draufsicht erkennbar ist. Bei dieser Ausführungsform ist am Umfang des Passringes 28a ein Loch 40 vorgesehen, das eine Verbindung zum Schleifringraum in der Schleifringkapsel 23 herstellt. An dem in Figur 2 erkennbaren Ausbruch am Passring 28a ist zu sehen, dass das Loch 40 an der Rückseite des Kugellagers 15 angeordnet ist. Dieses Loch fluchtet mit einem konischen Durchbruch 41 in der Nabe 17 des Lagerschildes 14. Der' Durchbruch 41 reicht vom Ansaugbereich 35 des Lüfters am Außenumfang der Nabe bis zum äußeren Endabschnitt der Lagerbohrung 16, wo auch das Loch 40 des Passringes 28 angeordnet ist.

Figur 3 zeigt einen Querschnitt durch die Schleifringkapsel 23a nach der Linie III-III aus Figur 2. Dort sind am Umfang der Schleifringkapsel 23a zwei luftdurchlässige, feuchtigkeitsdichte Wandungsbereiche 36a und 36b mit Abstand voneinander angeordnet, so dass je nach Einbaulage mindestens einer dieser Wandungsbereiche 36a, 36b durch unter Umständen über das Kugellager eindringendes Spritzwasser nicht verschlossen werden kann. Ferner ist aus Figur 3 erkennbar, dass die feuchtigkeitsdichten, luftdurchlässigen Wandungsbereiche 36a und 36b als Fenster ausgebildet sind, die durch einen Filter 42 verschlossen wurden. Die Filter 42 sind dabei mit ihren Rändern 42a im Kunststoffmaterial der Schleifringkapsel 23a eingespritzt, sie können alternativ auch von außen oder innen auf die Schleifringkapsel 23a aufgeklebt werden.

Auch hier kann Kühlluft 38 von außen durch die Wandungsbereiche 36a und 36b in den Schleifringraum 24 eingesaugt werden, die dann über das Loch 40 und den Durchbruch 41 zum Ansaugbereich 35 des Lüfters gelangt, und somit die Luft im Schleifringraum 24 gegen Überhitzung schützt.

Die Erfindung ist nicht auf die dargestellten Ausführungsbeispiele beschränkt. So kann anstelle einer Schleifringanordnung auch eine Kommutatoranordnung einer elektrischen Maschine einerseits durch eine Kapselung gegen Staub und Feuchtigkeit geschützt werden und andererseits durch eine Zwangsbelüftung über einen luftdurchlässigen Bereich der Kapselung in Verbindung mit einem innenliegenden Lüfter eine Überhitzung vermieden werden.

## Patentansprüche

1. Elektrische Maschine, insbesondere Drehstromgenerator für Kraftfahrzeuge, mit einer am hinteren Wellenende eines Läufers (12) angeordneten Schleifkontaktanordnung (18), die zur Versorgung einer Wicklung des Läufers mit mindestens einer Kohlebürste (20) eines am hinteren Lagerschild (14) der elektrischen Maschine befestigten Bürstenhalters (21) zusammenwirkt und die von einer an einer Lagerbohrung (16) des Lagerschildes befestigten Schleifringkapsel (23) eingefasst ist, wobei der Bürstenhalter mit seinem unteren Endbereich (21a) in eine Öffnung (25) der Schleifringkapsel (23) staub- und feuchtigkeitsdicht eingesetzt ist und wobei auf der Innenseite des Lagerschildes (14) ein Lüfter (29) am Läufer befestigt ist, **dadurch gekennzeichnet, dass** die Schleifringkapsel (23) zur Belüftung eines von ihr gebildeten Schleifringraumes (24) im Bereich der Schleifkontaktanordnung (18) mindestens einen luftdurchlässigen, feuchtigkeitsdichten Wandungsbereich (36) zum Lufteintritt und im Bereich der Lagerbohrung (16) mindestens einen zum Ansaugbereich (35) des Lüfters (29) führenden Kanal (37) zum Luftaustritt aufweist.

2. Elektrische Maschine nach Anspruch 1, **dadurch gekennzeichnet, dass** der luftdurchlässige, feuchtigkeitsdichte Wandungsbereich (36) der Schleifringkapsel (23) der Öffnung (25) für den Bürstenhalter (21) gegenüberliegt.

3. Elektrische Maschine nach Anspruch 1 oder 2, **dadurch gekennzeichnet, dass** der mindestens eine luftdurchlässige, feuchtigkeitsdichte Wandungsbereich (36) aus einem porösen Material besteht.

4. Elektrische Maschine nach Anspruch 1, 2 oder 3, **dadurch gekennzeichnet, dass** der mindestens eine luftdurchlässige, feuchtigkeitsdichte Wandungsbereich (36a) als Fenster ausgebildet ist, das durch einen Filter (42) verschlossen ist.

5. Elektrische Maschine nach Anspruch 4, **dadurch gekennzeichnet, dass** der Filter (42) mit seinen Rändern (42a) im Material der Schleifringkapsel (23), vorzugsweise aus Kunststoff, eingespritzt ist.

6. Elektrische Maschine nach einem der vorherigen Ansprüche, **dadurch gekennzeichnet, dass** am Umfang der Schleifringkapsel (23a) zwei luftdurchlässige, feuchtigkeitsdichte Wandungsbereiche (36a, 36b) mit Abstand voneinander angeordnet sind.

7. Elektrische Maschine nach einem der vorherigen Ansprüche, **dadurch gekennzeichnet, dass** am Innenumfang eines in die Lagerbohrung (16) des Lagerschildes (14) eingesetzten, am lagerseitigen Ende der Schleifringkapsel (23) angeformten Passringes (38) mehrere, axial verlaufende Kanäle (37) verteilt angeordnet sind, die einerseits mit dem Schleifringraum (24) und andererseits mit dem Ansaugbereich (35) des Lüfters (29) in Verbindung stehen.

8. Elektrische Maschine nach einem der Ansprüche 1 bis 6, **dadurch gekennzeichnet, dass** am lagerseitigen Ende der Schleifringkapsel (23a) ein Passring (28a) angeformt ist, der in die Lagerbohrung (16) des Lagerschildes (14) eingesetzt ist'und am Umfang mindestens ein zum Schleifringraum (24) der Schleifringkapsel (23) führendes Loch (4.0) aufweist, das mit mindestens einem Durchbruch (41) in einer Nabe (17) des Lagerschildes (14) fluchtet, der von dem im Ansaugbereich des Lüfters (29) liegenden Außenumfang der Nabe (17) bis zur Lagerbohrung (16), vorzugsweise bis zum äußeren Endabschnitt der Lagerbohrung (16) reicht.
